# EUROPÄISCHE PATENTSCHRIFT

(11) **EP 3 761 338 B1**
(45) Veröffentlichungstag und Bekanntmachung des Hinweises auf die Patenterteilung: **21.08.2024**
(21) Anmeldenummer: 20180761.7
(22) Anmeldetag: 18.06.2020
(51) Int. Cl.: H01H 47/00, H01H 47/18, H02H 7/18, B60L 3/04

(54) **SCHALTVORRICHTUNG UND VERFAHREN ZUM BETRIEB DER SCHALTVORRICHTUNG**
SWITCHING DEVICE AND METHOD FOR OPERATING THE SWITCHING DEVICE
DISPOSITIF DE COMMUTATION ET PROCÉDÉ DE FONCTIONNEMENT DU DISPOSITIF DE COMMUTATION

(30) Priorität: 04.07.2019 DE 102019209811
(43) Veröffentlichungstag der Anmeldung: 06.01.2021
(73) Patentinhaber: Robert Bosch GmbH, 70442 Stuttgart (DE)
(72) Erfinder: Tzivanopoulos, Chrysanthos, 71686 Remseck Am Neckar (DE); Hwang, Keonyeol, 70839 Gerlingen (DE)

(56) Entgegenhaltungen:
- DE-A1- 4 110 411
- US-A1- 2015 097 375

## Beschreibung

Die Erfindung betrifft eine Schaltvorrichtung, mit einem Schaltelement, das eine Schalteinheit, eine erste und eine zweite Spuleneinheit zum Schließen und Öffnen der Schalteinheit umfasst, wobei die erste Spuleneinheit eine erste Spule aufweist und wobei die zweite Spuleneinheit eine zweite Spule aufweist. Die Erfindung betrifft weiterhin Verfahren zum Betrieb der erfindungsgemäßen Schaltvorrichtung. Die Erfindung betrifft auch ein Batteriemanagementsystem, das mindestens eine solche Schaltvorrichtung aufweist, und ein Kraftfahrzeug, das mindestens eine solche Schaltvorrichtung, und/oder ein solches Batteriemanagementsystem aufweist.

### Stand der Technik

Es zeichnet sich ab, dass in Zukunft insbesondere in Fahrzeugen wie Elektrofahrzeugen (EV), Hybridfahrzeugen (HEV) oder Plug-In-Hybridfahrzeugen (PHEV) vermehrt Batteriesysteme zum Einsatz kommen werden, an welche hohe Anforderungen bezüglich Zuverlässigkeit, Leistungsfähigkeit, Sicherheit und Lebensdauer gestellt werden. Ein Batteriesystem umfasst im Wesentlichen eine Vielzahl von Batteriezellen und ein Batteriemanagementsystem zur Überwachung und Steuerung der Batteriezellen.

In der Regel umfasst ein Batteriemanagementsystem ein Schaltelement bzw. eine Schaltvorrichtung, das/die zur Unterbrechung des Energieflusses von oder zu den Batteriezellen dient. Bei einem Fehlerzustand des Schaltelements bzw. der Schaltvorrichtung kann das Batteriemanagementsystem seine Hauptfunktion, nämlich die Überwachung und Steuerung der Energieversorgung und - speicherung durch die Batteriezellen nicht bereitstellen. Dies könnte zu einer unerwarteten Situation, wie z.B. einem Unfall, führen.

Aus dem Dokument US 2018/0261416 A1 ist eine Schaltvorrichtung bekannt. Die Schaltvorrichtung umfasst einen elektromagnetischen Aktuator, der eine erste Spule und eine zweite Spule zum Ein- und Ausschalten eines Stromkreises aufweist.

Das Dokument US 2015/0371748 A1 offenbart eine elektromagnetische Betätigungsvorrichtung zum Ein- und Ausschalten eines Vakuumventils, wobei die elektromagnetische Betätigungsvorrichtung einen elektromagnetischen Betätigungsabschnitt umfasst. Der elektromagnetische Betätigungsabschnitt weist eine erste Spule zu Einschalten des Vakuumventils und mindestens eine zweite Spule zum Ausschalten des Vakuumventils auf.

Das Dokument US 2015/097375 A1 offenbart ein Schaltelement, umfassend eine Schalteinheit, eine erste und eine zweite Spuleneinheit, wobei die erste Spuleneinheit eine erste Spule aufweist, wobei die zweite Spuleneinheit eine zweite Spule aufweist und wobei die erste Spuleneinheit eine erste steuerbare Verzögerungsschaltung aufweist, die mit der ersten Spule in Reihe geschaltet ist.

Das Dokument DE 4110 411 A1 offenbart ein Schaltelement, umfassend eine Schalteinheit, eine erste und eine zweite Spuleneinheit zum Schließen und Öffnen der Schalteinheit, wobei die erste Spuleneinheit eine erste Spule aufweist, wobei die zweite Spuleneinheit eine zweite Spule aufweist, die mit ersten Spule in Reihe geschaltet ist.

### Offenbarung der Erfindung

Es wird eine Schaltvorrichtung umfassend ein Schaltelement vorgeschlagen. Das Schaltelement umfasst eine Schalteinheit, eine erste und eine zweite Spuleneinheit zum Schließen und Öffnen der Schalteinheit, wobei die erste Spuleneinheit eine erste Spule aufweist und wobei die zweite Spuleneinheit eine zweite Spule aufweist.

Erfindungsgemäß weist die erste Spuleneinheit eine erste steuerbare Verzögerungsschaltung auf, die mit der ersten Spule in Reihe geschaltet ist.

Die Schalteinheit dient zum Ein- und Ausschalten eines Stromkreises. Sie umfasst verschiedene Bauteile, wie beispielsweise einen Anker aus ferromagnetischen Materialien, mindestens einen festen Schaltkontakt und mindestens einen bewegbaren Schaltkontakt. Dabei ist der Anker mit dem mindestens einen bewegbaren Schaltkontakt mechanisch verbunden. Der Anker bewegt sich abhängig von einem durch eine Spuleneinheit erzeugten Magnetfeld. Somit können der mindestens eine feste Schaltkontakt und der mindestens eine bewegbare Schaltkontakt miteinander verbunden (entspricht einem Schließzustand der Schalteinheit bzw. einem Einschaltzustand des Stromkreises) und getrennt (entspricht einem Offenzustand der Schalteinheit bzw. einem Ausschaltzustand des Stromkreises) werden.

Eine Verzögerungsschaltung dient zum automatischen Ausschalten einer Spuleneinheit nach einer vorgegebenen Zeitspanne. Eine Verzögerungsschaltung ist steuerbar, wenn die vorgegebene Zeitspanne, nämlich die Verzögerungszeit der Verzögerungsschaltung, einstellbar ist.

Erfindungsgemäss ist die Verzögerungsschaltung durch mindestens eine Steuereinheit steuerbar, sodass die Spuleneinheit je nach Bedarf nach einer beliebigen Zeitspanne automatisch ausgeschaltet werden kann.

Erfindungsgemäss umfasst die zweite Spuleneinheit eine zweite steuerbare Verzögerungsschaltung, die mit der zweiten Spule in Reihe geschaltet ist.

Es wird ferner eine Schaltvorrichtung vorgeschlagen, die ein Schaltelement, mindestens eine Steuereinheit zur Steuerung der ersten Verzögerungsschaltung und, sofern vorhanden, der zweiten Verzögerungsschaltung, eine erste Treiberschaltung zum Antreiben der ersten Spuleneinheit des Schaltelements und eine zweite Treiberschaltung zum Antreiben der zweiten Spuleneinheit des Schaltelements umfasst.

Im Falle, dass die erste und zweite Spuleneinheit jeweils eine steuerbare Verzögerungsschaltung aufweisen, können die beiden Verzögerungsschaltungen durch eine gemeinsame Steuereinheit gesteuert werden. Es ist aber auch denkbar, dass die beiden Verzögerungsschaltungen jeweils einer Steuereinheit zugeordnet sind.

Unter einer Treiberschaltung ist eine elektrische Schaltung zu verstehen, die zum Ein- und Ausschalten der der Treiberschaltung zugeordneten Spuleneinheit dient. Eine Treiberschaltung kann beispielsweise als eine H-Brückenschaltung aus vier Halbleiterschaltern, wie z.B. MOSFET oder IGBT, ausgebildet werden. Durch eine entsprechende Steuerung der vier Halbleiterschalter fließt ein Strom beim Schließen der Schalteinheit in eine erste Richtung in der Spule der der Treiberschaltung zugeordneten Spuleneinheit, während beim Öffnen der Schalteinheit ein Strom in eine der ersten Richtung entgegengesetzte zweite Richtung in der Spule fließt. Die Schaltvorrichtung kann ein Steuergerät zur Steuerung der beiden Treiberschaltungen aufweisen. Es ist aber auch denkbar, dass die beiden Treiberschaltungen jeweils einem Steuergerät zugeordnet sind. Denkbar ist auch, dass die Steuerung der Treiberschaltungen durch ein oder zwei externe Steuergeräte ausgeführt wird.

Vorzugsweise ist die mindestens eine Steuereinheit dazu eingerichtet, die erste steuerbare Verzögerungsschaltung und die zweite steuerbare Verzögerungsschaltung separat voneinander zu steuern. Das heißt, dass die Verzögerungszeit der ersten und der zweiten Verzögerungsschaltung unabhängig voneinander durch die mindestens eine Steuereinheit einstellbar ist.

Die erste und zweite Spuleneinheit können über die jeweiligen Treiberschaltungen durch eine gemeinsame Energiequelle versorgt werden. Es ist auch denkbar, dass die erste Spuleneinheit über die erste Treiberschaltung durch eine erste Energiequelle versorgt wird, während die zweite Treiberschaltung durch eine zweite Energiequelle versorgt wird.

Gemäß einer bevorzugten Ausgestaltung der Erfindung umfasst die erfindungsgemäße Schaltvorrichtung mindestens eine interne Energiequelle, die die erste Spuleneinheit über die erst Treiberschaltung und die zweite Spuleneinheit über die zweite Treiberschaltung versorgt. Es ist aber auch denkbar, dass die erste und die zweite Spuleneinheit durch mindestens eine externe Energiequelle versorgt werden. Die mindestens eine interne bzw. externe Energiequelle kann als Energiespeicher, wie beispielsweise Batterie oder Kondensator, ausgebildet werden.

Es wird auch ein erstes Verfahren zum Betrieb der erfindungsgemäßen Schaltvorrichtung vorgeschlagen.

Dabei wird die Schalteinheit des erfindungsgemäßen Schaltelements durch gleichzeitiges Einschalten der ersten Spuleneinheit und der zweiten Spuleneinheit geschlossen. Unabhängig davon, ob die zweite Spuleneinheit eine Verzögerungsschaltung aufweist, bleibt die Schalteinheit nach dem Schließen geschlossen. Das heißt, dass nach dem Schließen der Schalteinheit die erste und/oder die zweite Spuleneinheit nicht durch die zugeordnete Verzögerungsschaltung ausgeschaltet werden.

Die Energieversorgung der ersten und der zweiten Spuleneinheit wird bevorzugt stets überwacht. Dies kann z.B. durch ein Steuergerät zur Steuerung der ersten und/oder zweiten Treiberschaltungen erreicht. Durch die Überwachung der Energieversorgung kann ein Fehler der ersten und/oder der zweiten Spuleneinheit oder der jeweiligen Treiberschaltungen erkannt werden.

Es wird bevorzugt überwacht, ob durch Ansteuern der ersten und/oder zweiten Spuleneinheit die Schalteinheit tatsächlich an- oder ausgeschaltet wird.

Bei Vorliegen eines Fehlerzustands der zweiten Spuleneinheit oder der zweiten Treiberschaltung wird der Schließzustand der Schalteinheit durch die erste Spuleneinheit gehalten. Bei Vorliegen eines Fehlerzustands der ersten Spuleneinheit oder der ersten Treiberschaltung wird der Schließzustand der Schalteinheit durch die zweite Spuleneinheit gehalten.

Wird ein Fehlerzustand bei der zweiten Spuleneinheit oder der zweiten Treiberschaltung erkannt, kann die erste Spuleneinheit durch die erste Verzögerungsschaltung nach einer vorgegebenen Zeitspanne ausgeschaltet werden, wenn ein Steuersignal von der mindestens einen Steuereinheit an die erste Verzögerungsschaltung geleitet wird. Die Schalteinheit bleibt geschlossen, wenn kein Steuersignal von der mindestens einen Steuereinheit geleitet wird.

Wird ein Fehlerzustand bei der ersten Spuleneinheit oder bei der ersten Treiberschaltung erkannt und weist die zweite Spuleneinheit eine zweite Verzögerungsschaltung auf, kann die zweite Spuleneinheit durch die zweite Verzögerungsschaltung nach einer vorgegebenen Zeitspanne ausgeschaltet werden, wenn ein Steuersignal von der mindestens einen Steuereinheit an die zweite Verzögerungsschaltung geleitet wird. Die Schalteinheit bleibt geschlossen, wenn kein Steuersignal von der mindestens einen Steuereinheit an die zweite Verzögerungsschaltung geleitet wird oder die zweite Spuleneinheit keine Verzögerungsschaltung aufweist.

Es wird weiterhin ein zweites Verfahren zum Betrieb der erfindungsgemäßen Schaltvorrichtung vorgeschlagen.

Dabei wird die Schalteinheit durch Einschalten der zweiten Spuleneinheit geschlossen. Unabhängig davon, ob die zweite Spuleneinheit eine Verzögerungsschaltung aufweist, bleibt die Schalteinheit nach dem Schließen geschlossen. Nach Erkennen eines Fehlerzustands der zweiten Spuleneinheit oder der zweiten Treiberschaltung wird die erste Spuleneinheit eingeschaltet.

Vorzugsweise wird die erste Spuleneinheit beim zweiten erfindungsgemäßen Verfahren nach einer vorgegebenen Zeitspanne durch die erste Verzögerungsschaltung ausgeschaltet. Dies wird erreicht, wenn ein Steuersignal von der mindestens einen Steuereinheit an die erste Verzögerungsschaltung geleitet wird.

Es ist selbstverständlich möglich, dass die Schalteinheit durch Einschalten der ersten Spuleneinheit geschlossen wird, und bei einer Erkennung eines Fehlerzustands der ersten Spuleneinheit oder der ersten Treiberschaltung wird die zweite Spuleneinheit eingeschaltet.

In diesem Fall kann die zweite Spuleneinheit durch die zweite Verzögerungsschaltung nach einer vorgegebenen Zeitspanne ausgeschaltet werden, wenn die zweite Spuleneinheit eine zweite Verzögerungsschaltung aufweist und ein Steuersignal von der mindestens einen Steuereinheit an die zweite Verzögerungsschaltung geleitet wird. Die Schalteinheit bleibt geschlossen, wenn kein Steuersignal von der mindestens einen Steuereinheit an die zweite Verzögerungsschaltung geleitet wird oder die zweite Spuleneinheit keine Verzögerungsschaltung aufweist.

Es wird ferner ein Batteriemanagementsystem vorgeschlagen, das mindestens eine erfindungsgemäße Schaltvorrichtung umfasst.

Es wird auch ein Kraftfahrzeug vorgeschlagen, das mindestens eine erfindungsgemäße Schaltvorrichtung und/oder mindestens ein erfindungsgemäßes Batteriemanagementsystem aufweist.

### Vorteile der Erfindung

Mit der erfindungsgemäßen Schaltvorrichtung kann der externe Stromkreis, wie beispielsweise ein Bordnetz eines Kraftfahrzeugs, bei Vorliegen eines Fehlers in einer der beiden Spuleneinheiten oder der zugehörigen Treiberschaltung trotzdem eingeschaltet bleiben. Somit werden die Zuverlässigkeit und Sicherheit des Batteriesystems sowie des Kraftfahrzeugs erhöht.

Darüber hinaus kann der externe Stromkreis mit Hilfe der steuerbaren Verzögerungsschaltungen nach Erkennung eines Fehlers der Spuleneinheit oder deren Treiberschaltung je nach Bedarf nach einer vorgegebenen Zeitspanne ausgeschaltet werden. Dies stellt die Möglichkeit bereit, dass der externe Stromkreis je nach Fehlerzustand nach einer vorgegebenen Zeitspanne ausgeschaltet werden kann.

Mit dem erfindungsgemäßen Verfahren kann eine Einsparung der elektrischen Energie zum Halten des Schließzustands der Schalteinheit ermöglicht werden, während gleichzeitig die Zuverlässigkeit und die Sicherheit des Kraftfahrzeugs gewährleistet werden.

### Kurze Beschreibung der Zeichnungen

Ausführungsformen der Erfindung werden anhand der Zeichnungen und der nachfolgenden Beschreibung näher erläutert.

Es zeigen:
- Figur 1: eine schematische Darstellung eines Schaltelements gemäß einer ersten Ausgestaltung der Schaltvorrichtung der Erfindung,
- Figur 2: eine schematische Darstellung eines Schaltelements gemäß einer zweiten Ausgestaltung der Schaltvorrichtung der Erfindung,
- Figur 3: eine schematische Darstellung einer erfindungsgemäßen Schaltvorrichtung, und
- Figur 4: eine schematische Darstellung einer Treiberschaltung.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

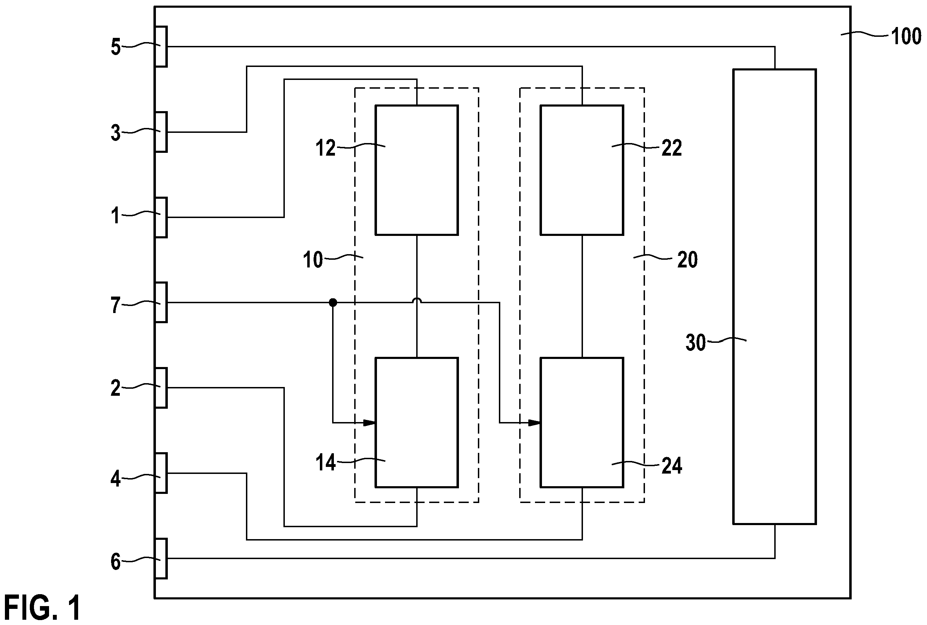

Figur 1 zeigt eine schematische Darstellung eines Schaltelements 100 gemäß einer ersten Ausgestaltung der Schaltvorrichtung der Erfindung. Dabei weist das Schaltelement 100 eine erste Spuleneinheit 10 und eine zweite Spuleneinheit 20 auf.

Die erste Spuleneinheit 10 umfasst dabei eine erste Spule 12 und eine erste steuerbare Verzögerungsschaltung 14, welche miteinander in Reihe geschaltet sind. Die zweite Spuleneinheit 20 umfasst dabei eine zweite Spule 22 und eine zweite steuerbare Verzögerungsschaltung 24, welche ebenfalls miteinander in Reihe geschaltet sind.

Das Schaltelement 100 weist ferner eine Schalteinheit 30 auf, die verschiedene Bauteile umfasst, wie beispielsweise einen Anker aus ferromagnetischen Materialien, mindestens einen festen Schaltkontakt und mindestens einen bewegbaren Schaltkontakt. Dabei ist der Anker mit dem bewegbaren Schaltkontakt mechanisch verbunden. Der Anker bewegt sich abhängig von einem durch eine oder beide Spuleneinheiten 10, 20 erzeugten Magnetfeld. Somit können der mindestens eine feste Schaltkontakt und der mindestens eine bewegbare Schaltkontakt miteinander verbunden oder getrennt werden.

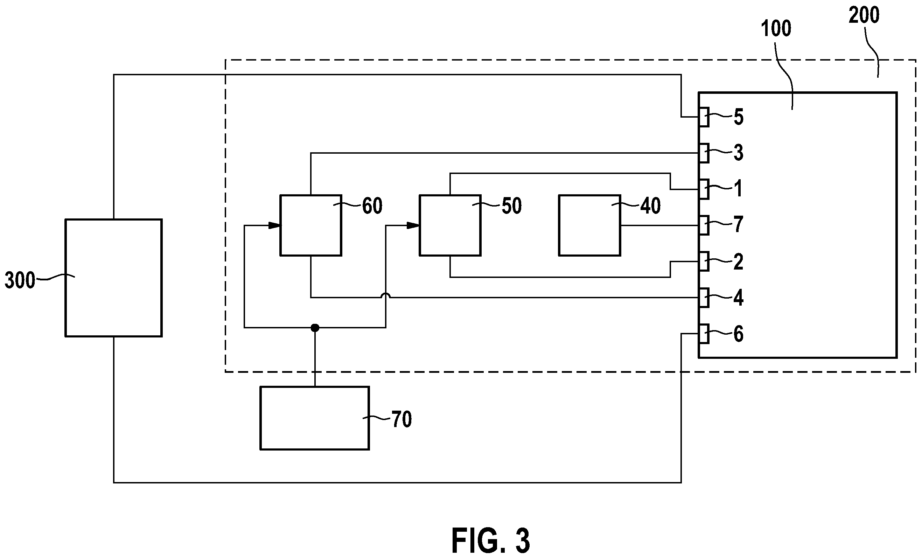

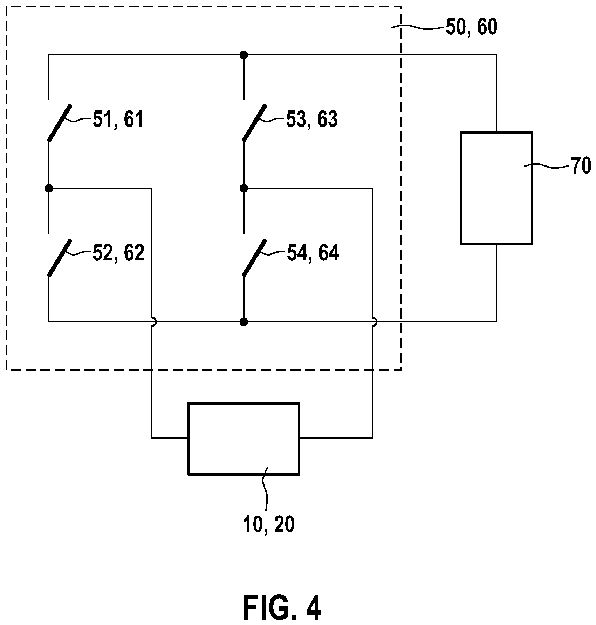

Das Schaltelement 100 umfasst weiterhin sieben Anschlüsse 1 bis 7. Dabei wird die erste Spuleneinheit 10 über einen ersten Anschluss 1 und einen zweiten Anschluss 2 mit einer ersten Treiberschaltung 50 (siehe Figuren 3 und 4) elektrisch verbunden. Die zweite Spuleneinheit 20 wird über einen dritten Anschluss 3 und einen vierten Anschluss 4 mit einer zweiten Treiberschaltung 60 (siehe Figuren 3 und 4) elektrisch verbunden. Über einen fünften Anschluss 5 und einen sechsten Anschluss 6 wird ein externer Stromkreis 300 (siehe Figur 3) mit den Schaltkontakten der Schalteinheit 30 elektrisch verbunden. Die Schaltelement 100 kann noch weitere Anschlüsse aufweisen, wie z.B. einen Masseanschluss und Anschlüsse für weitere externe Stromkreise, die durch die Schalteinheit 30 ein- und ausgeschaltet werden sollen.

Über einen siebten Anschluss 7 werden Steuerungssignale von einer Steuereinheit 40 (siehe Figur 3) an die erste Verzögerungsschaltung 14 und die zweite Verzögerungsschaltung 24 geleitet, damit die Verzögerungszeiten der ersten und der zweiten Verzögerungsschaltung 14, 24 je nach Bedarf beliebig eingestellt werden können. Hierbei kann die Steuereinheit 40 für jede steuerbare Verzögerungsschaltung 14, 24 ein eignes Steuersignal erzeugen oder sie kann für beiden steuerbaren Verzögerungsschaltungen 14, 24 gleiche Steuersignale erzeugen. Das heißt, dass die beiden steuerbaren Verzögerungsschaltungen 14, 24 unterschiedliche oder gleiche Verzögerungszeiten aufweisen können.

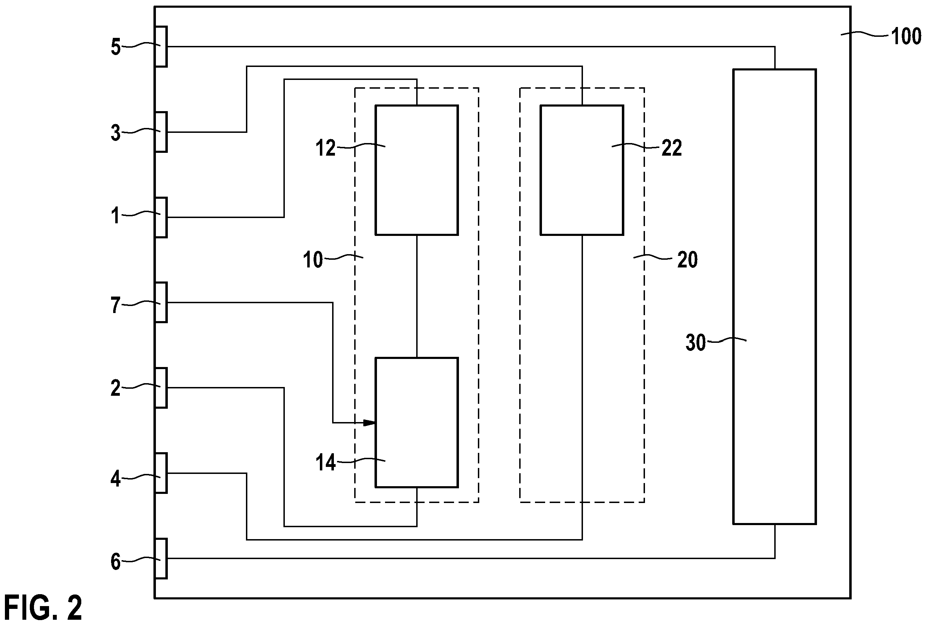

Figur 2 zeigt eine schematische Darstellung eines Schaltelements 100 gemäß einer zweiten Ausgestaltung der Erfindung. Dabei weist das Schaltelement 100 eine erste Spuleneinheit 10 und eine zweite Spuleneinheit 20 auf.

Ein wesentlicher Unterschied zwischen dem in Figur 1 dargestellten Schaltelement 100 und dem in Figur 2 dargestellten Schaltelement 100 besteht dahin, dass nur die erste Spuleneinheit 10 des in Figur 2 dargestellten Schaltelements 100 eine erste Verzögerungsschaltung 14 aufweist. Es ist aber denkbar, dass nur die zweite Spuleneinheit 20 des in Figur 2 dargestellten Schaltelements 100 eine zweite Verzögerungsschaltung 24 (vgl. Figur 1) aufweist.

Das in Figur 2 dargestellte Schaltelement 100 weist ebenso wie das in Figur 1 dargestellte Schaltelement 100 eine Schalteinheit 30 und sieben Anschlüsse 1 bis 7 auf. Dabei wird die erste Spuleneinheit 10 über die Anschlüsse 1 und 2 mit einer ersten Treiberschaltung 50 elektrisch verbunden. Die zweite Spuleneinheit 20 wird über die Anschlüsse 3 und 4 mit einer zweiten Treiberschaltung 60 elektrisch verbunden. Über die Anschlüsse 5 und 6 wird ein externer Stromkreis 300 mit den Schaltkontakten der Schalteinheit 30 elektrisch verbunden.

Über den Anschluss 7 werden Steuerungssignale von einer Steuereinheit 40 an die erste Verzögerungsschaltung 14 geleitet, damit die Verzögerungszeiten der ersten Verzögerungsschaltung 14 je nach Bedarf beliebig eingestellt werden kann.

In Figur 3 ist eine schematische Darstellung der erfindungsgemäßen Schaltvorrichtung 200 gezeigt. Die Schaltvorrichtung 200 umfasst ein Schaltelement 100, das in Figur 1 oder 2 gezeigt wird, eine erste Treiberschaltung 50 und eine zweite Treiberschaltung 60.

Die erste Treiberschaltung 50 ist über die Anschlüsse 1 und 2 des Schaltelements 100 mit der ersten Spuleneinheit 10 (vgl. Figuren 1 und 2) elektrisch verbunden, während die zweite Treiberschaltung 60 über die Anschlüsse 3 und 4 des Schaltelements 100 mit der zweiten Spuleneinheit 20 (vgl. Figuren 1 und 2) elektrisch verbunden ist.

Über die Anschlüsse 5 und 6 des Schaltelements 100 ist ein externer Stromkreis 300 mit den Schaltkontakten der Schalteinheit 30 (vgl. Figuren 1 und 2) des Schaltelements 100 elektrisch verbunden. Dabei kann der externe Stromkreis als ein Bordnetz eines Kraftfahrzeugs ausgebildet werden, wobei das Bordnetz ein Batteriesystem mit einer Vielzahl von Batteriezellen und einem Batteriemanagementsystem aufweist. Die erfindungsgemäße Schaltvorrichtung 200 kann im Batteriemanagement integriert sein.

Eine Steuereinheit 40 ist mit dem Anschluss 7 elektrisch verbunden, damit Steuersignale zur Steuerung der ersten und/oder der zweiten Verzögerungsschaltung 14, 24 (vgl. Figuren 1 und 2) von der Steuereinheit 40 an die erste und die zweite Verzögerungsschaltung 14, 24 geleitet werden.

Über die erste und die zweite Treiberschaltung 50, 60 sind die erste und die zweite Spuleneinheit 10, 20 über eine externe, gemeinsame Energiequelle 70 versorgt. Es ist denkbar, dass die erste und die zweite Spuleneinheit 10, 20 über die jeweiligen Treiberschaltungen 50, 60 durch zwei separate Energiequellen 70 versorgt werden. In Figur 3 ist eine externe Energiequelle 70 verwendet. Denkbar ist auch, dass die Schaltvorrichtung 200 mindestens eine Energiequelle 70 aufweist.

Die Schaltvorrichtung 200 kann ein Steuergerät (nicht dargestellt) zur Steuerung der beiden Treiberschaltungen 50, 60 aufweisen. Es ist aber auch denkbar, dass die beiden Treiberschaltungen 50, 60 jeweils einem Steuergerät zugeordnet sind. Denkbar ist auch, dass die Steuerung der Treiberschaltungen 50, 60 durch mindestens ein externes Steuergerät ausgeführt wird.

Figur 4 zeigt eine schematische Darstellung einer Treiberschaltung 50, 60. Die Treiberschaltung 50, 60 ist dabei als eine H-Brückenschaltung aus vier Halbleiterschaltern 51 bis 54, 61 bis 64, wie z.B. MOSFET oder IGBT, ausgebildet. Durch eine entsprechende Steuerung der vier Halbleiterschalter 51 bis 54, 61 bis 64 fließt ein Strom beim Schließen der Schalteinheit 30 in eine erste Richtung in der Spule 12, 22 der der Treiberschaltung 50, 60 zugeordneten Spuleneinheit 10, 20, während beim Öffnen der Schalteinheit 30 ein Strom in eine der ersten Richtung entgegengesetzte zweite Richtung in der Spule 12, 22 fließt. Beispielsweise werden beim Einschalten der ersten Spuleneinheit 10 bzw. der zweiten Spuleneinheit 20 ein erster Halbleiterschalter 51 und ein vierter Halbleiterschalter 54 der ersten Treiberschaltung 50 bzw. ein erster Halbleiterschalter 61 und ein vierter Halbleiterschalter 64 der zweiten Treiberschaltung 60 eingeschaltet, während ein zweiter Halbleiterschalter 52 und ein dritter Halbleiterschalter 53 der ersten Treiberschaltung 50 bzw. ein zweiter Halbleiterschalter 62 und ein dritter Halbleiterschalter 63 der zweiten Treiberschaltung 60 ausgeschaltet bleiben. Beim Ausschalten der ersten Spuleneinheit 10 bzw. der zweiten Spuleneinheit 20 werden der zweite Halbleiterschalter 52 und der dritte Halbleiterschalter 53 der ersten Treiberschaltung 50 bzw. der zweite Halbleiterschalter 62 und der dritte Halbleiterschalter 63 der zweiten Treiberschaltung 60 eingeschaltet, während der erste Halbleiterschalter 51 und der vierte Halbleiterschalter 54 der ersten Treiberschaltung 50 bzw. der erste Halbleiterschalter 61 und der vierte Halbleiterschalter 64 der zweiten Treiberschaltung 60 ausgeschaltet werden.

Im Betrieb der erfindungsgemäßen Schaltvorrichtung 200 kann die Schalteinheit 30 des Schaltelements 100 durch geleichzeitiges Einschalten der ersten Spuleneinheit 10 und der zweiten Spuleneinheit 20 geschlossen werden. Bei einer Erkennung eines Fehlerzustands der zweiten Spuleneinheit 20 oder der zweiten Treiberschaltung 60 wird der Schließzustand der Schalteinheit 30 durch die erste Spuleneinheit 10 gehalten. Bei einer Erkennung eines Fehlerzustands der ersten Spuleneinheit 10 oder der ersten Treiberschaltung 50 wird der Schließzustand der Schalteinheit 30 durch die zweite Spuleneinheit 20 gehalten.

Wird ein Fehlerzustand bei der zweiten Spuleneinheit 20 oder der zweiten Treiberschaltung 60 erkannt, kann die erste Spuleneinheit 10 durch die erste Verzögerungsschaltung 14 nach einer vorgegebenen Zeitspanne ausgeschaltet werden, wenn ein Steuersignal von der Steuereinheit 40 an die erste Verzögerungsschaltung 14 geleitet wird. Die Schalteinheit 30 bleibt geschlossen, wenn kein Steuersignal von der mindestens einen Steuereinheit 40 erhalten wird.

Wird ein Fehlerzustand bei der ersten Spuleneinheit 10 oder bei der ersten Treiberschaltung 50 erkannt und weist der zweite Spuleneinheit 20 eine zweite Verzögerungsschaltung 24 auf, kann die zweite Spuleneinheit 20 durch die zweite Verzögerungsschaltung 24 nach einer vorgegebenen Zeitspanne ausgeschaltet werden, wenn ein Steuersignal von der mindestens einen Steuereinheit 40 an die zweite Verzögerungsschaltung 24 geleitet wird. Die Schalteinheit 30 bleibt geschlossen, wenn kein Steuersignal von der Steuereinheit 40 erhalten wird oder die zweite Spuleneinheit 20 keine Verzögerungsschaltung 24 aufweist.

Im Betrieb der erfindungsgemäßen Schaltvorrichtung 200 kann die Schalteinheit 30 auch durch Einschalten der zweiten Spuleneinheit 20 geschlossen werden. Bei Erkennung eines Fehlerzustands der zweiten Spuleneinheit 20 oder der zweiten Treiberschaltung 60 wird die erste Spuleneinheit 10 eingeschaltet.

Nach einer vorgegebenen Zeitspanne kann die erste Spuleneinheit 10 durch die erste Verzögerungsschaltung 14 ausgeschaltet werden.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Schaltvorrichtung (200) umfassend ein Schaltelement (100), umfassend
eine Schalteinheit (30), eine erste und eine zweite Spuleneinheit (10, 20) zum Schließen und Öffnen der Schalteinheit (30),
wobei die erste Spuleneinheit (10) eine erste Spule (12) aufweist und
wobei die zweite Spuleneinheit (20) eine zweite Spule (22) aufweist,
**dadurch gekennzeichnet, dass**
die erste Spuleneinheit (10) eine erste steuerbare Verzögerungsschaltung (14) aufweist, die mit der ersten Spule (12) in Reihe geschaltet ist,
wobei die zweite Spuleneinheit (20) eine zweite steuerbare Verzögerungsschaltung (24) aufweist, die mit der zweiten Spule (22) in Reihe geschaltet ist,
wobei die Schaltvorrichtung (200) mindestens eine Steuereinheit (40) zur Steuerung der ersten steuerbaren Verzögerungsschaltung (14) und der zweiten steuerbaren Verzögerungsschaltung (24), eine erste Treiberschaltung (50) zum Antreiben der ersten Spuleneinheit (10) und eine zweite Treiberschaltung (60) zum Antreiben der zweiten Spuleneinheit (20) aufweist, wobei die Verzögerungszeit der ersten steuerbaren Verzögerungsschaltung (14) und der zweiten steuerbaren Verzögerungsschaltung (24) durch die mindestens eine Steuereinheit (40) einstellbar ist.

2. Schaltvorrichtung (200) nach Anspruch 1, **dadurch gekennzeichnet,**
**dass**
die mindestens eine Steuereinheit (40) dazu eingerichtet ist, die erste steuerbare Verzögerungsschaltung (14) und die zweite steuerbare Verzögerungsschaltung (24) separat voneinander zu steuern.

3. Schaltvorrichtung (200) nach Anspruch 1 oder 2, **dadurch gekennzeichnet, dass**
die Schaltvorrichtung (200) mindestens eine Energiequelle (70) umfasst,
die die erste Spuleneinheit (10) über die erste Treiberschaltung (50) und
die zweite Spuleneinheit (20) über die zweite Treiberschaltung (60) versorgt.

4. Verfahren zum Betrieb der Schaltvorrichtung (200) nach einem der Ansprüche 1 bis 3, umfassend
- Schließen der Schalteinheit (30) durch gleichzeitiges Einschalten der ersten Spuleneinheit (10) und der zweiten Spuleneinheit (20);
- Halten des Schließzustands der Schalteinheit (30) durch die erste Spuleneinheit (10) bei Vorliegen eines Fehlerzustands der zweiten Spuleneinheit (20) oder der zweiten Treiberschaltung (60); oder Halten des Schließzustands der Schalteinheit (30) durch die zweite Spuleneinheit (20) bei Vorliegen eines Fehlerzustands der ersten Spuleneinheit (10) oder der ersten Treiberschaltung (50).

5. Verfahren zum Betrieb der Schaltvorrichtung (200) nach einem der Ansprüche 1 bis 3, umfassend
- Schließen der Schalteinheit (30) durch Einschalten der zweiten Spuleneinheit (20);
- Einschalten der ersten Spuleneinheit (10) bei einer Erkennung eines Fehlerzustands der zweiten Spuleneinheit (20) oder der zweiten Treiberschaltung (60).

6. Verfahren nach Anspruch 5, **dadurch gekennzeichnet, dass** die erste Spuleneinheit (10) nach einer vorgegebenen Zeitspanne durch die erste steuerbare Verzögerungsschaltung (14) ausgeschaltet wird.

7. Batteriemanagementsystem, das mindestens eine Schaltvorrichtung (200) nach einem der Ansprüche 1 bis 3 umfasst.

8. Kraftfahrzeug, das mindestens eine Schaltvorrichtung (200) nach einem der Ansprüche 1 bis 3 und/oder mindestens ein Batteriemanagementsystem nach Anspruch 7 umfasst.

## Claims

1. Switching device (200), comprising a switching element (100), comprising a switching unit (30), a first and a second coil unit (10, 20) for closing and opening the switching unit (30),
wherein the first coil unit (10) has a first coil (12), and wherein the second coil unit (20) has a second coil (22), **characterized in that** the first coil unit (10) has a first controllable delay circuit (14) that is connected in series with the first coil (12),
wherein the second coil unit (20) has a second controllable delay circuit (24) that is connected in series with the second coil (22),
wherein the switching device (200) has at least one control unit (40) for controlling the first controllable delay circuit (14) and the second controllable delay circuit (24), a first driver circuit (50) for driving the first coil unit (10) and a second driver circuit (60) for driving the second coil unit (20), wherein the delay time of the first controllable delay circuit (14) and the second controllable delay circuit (24) is able to be set by the at least one control unit (40).

2. Switching device (200) according to Claim 1, **characterized in that** the at least one control unit (40) is configured to control the first controllable delay circuit (14) and the second controllable delay circuit (24) separately from one another.

3. Switching device (200) according to Claim 1 or 2, **characterized in that** the switching device (200) comprises at least one energy source (70) that supplies power to the first coil unit (10) via the first driver circuit (50) and to the second coil unit (20) via the second driver circuit (60).

4. Method for operating the switching device (200) according to one of Claims 1 to 3, comprising
- closing the switching unit (30) by simultaneously switching on the first coil unit (10) and the second coil unit (20);
- the first coil unit (10) maintaining the closed state of the switching unit (30) in the presence of a fault state in the second coil unit (20) or the second driver circuit (60); or the second coil unit (20) maintaining the closed state of the switching unit (30) in the presence of a fault state in the first coil unit (10) or the first driver circuit (50).

5. Method for operating the switching device (200) according to one of Claims 1 to 3, comprising
- closing the switching unit (30) by switching on the second coil unit (20);
- switching on the first coil unit (10) if a fault state in the second coil unit (20) or the second driver circuit (60) is identified.

6. Method according to Claim 5, **characterized in that**
the first coil unit (10) is switched off by the first controllable delay circuit (14) after a predefined period of time.

7. Battery management system that comprises at least one switching device (200) according to one of Claims 1 to 3.

8. Motor vehicle that comprises at least one switching device (200) according to one of Claims 1 to 3 and/or at least one battery management system according to Claim 7.

## Revendications

1. Dispositif de commutation (200) comprenant un élément de commutation (100), comprenant une unité de commutation (30), une première et une deuxième unité de bobine (10, 20) pour fermer et ouvrir l'unité de commutation (30),
la première unité de bobine (10) présentant une première bobine (12) et la deuxième unité de bobine (20) présentant une deuxième bobine (22), **caractérisé en ce que**
la première unité de bobine (10) présente un premier circuit à retard commandable (14) connecté en série avec la première bobine (12),
la deuxième unité de bobine (20) présentant un deuxième circuit à retard commandable (24) connecté en série avec la deuxième bobine (22),
le dispositif de commutation (200) présentant au moins une unité de commande (40) pour commander le premier circuit à retard commandable (14) et le deuxième circuit à retard commandable (24), un premier circuit d'entraînement (50) pour entraîner la première unité de bobine (10) et un deuxième circuit d'entraînement (60) pour entraîner la deuxième unité de bobine (20), le temps de retard du premier circuit à retard commandable (14) et du deuxième circuit à retard commandable (24) pouvant être réglé par l'au moins une unité de commande (40).

2. Dispositif de commutation (200) selon la revendication 1, **caractérisé en ce que**
l'au moins une unité de commande (40) est adaptée pour commander le premier circuit à retard commandable (14) et le deuxième circuit à retard commandable (24) séparément l'un de l'autre.

3. Dispositif de commutation (200) selon la revendication 1 ou 2, **caractérisé en ce que**
le dispositif de commutation (200) comprend au moins une source d'énergie (70) qui alimente la première unité de bobine (10) via le premier circuit d'entraînement (50) et la deuxième unité de bobine (20) via le deuxième circuit d'entraînement (60).

4. Procédé d'exploitation du dispositif de commutation (200) selon l'une quelconque des revendications 1 à 3, comprenant
- la fermeture de l'unité de commutation (30) par mise sous tension simultanée de la première unité de bobine (10) et de la deuxième unité de bobine (20) ;
- le maintien de l'état de fermeture de l'unité de commutation (30) par la première unité de bobine (10) en présence d'un état de défaillance de la deuxième unité de bobine (20) ou du deuxième circuit d'entraînement (60) ; ou le maintien de l'état de fermeture de l'unité de commutation (30) par la deuxième unité de bobine (20) en présence d'un état de défaillance de la première unité de bobine (10) ou du premier circuit d'entraînement(50).

5. Procédé d'exploitation du dispositif de commutation (200) selon l'une quelconque des revendications 1 à 3, comprenant
- la fermeture de l'unité de commutation (30) par mise sous tension la deuxième unité de bobine (20) ;
- la mise sous tension de la première unité de bobine (10) lors de la détection d'un état de défaillance de la deuxième unité de bobine (20) ou du deuxième circuit d'entraînement (60).

6. Procédé selon la revendication 5, **caractérisé en ce que** la première unité de bobine (10) est désactivée après une période de temps prédéterminée par le premier circuit à retard commandable (14).

7. Système de gestion de batterie, comprenant au moins un dispositif de commutation (200) selon l'une quelconque des revendications 1 à 3.

8. Véhicule automobile, comprenant au moins un dispositif de commutation (200) selon l'une quelconque des revendications 1 à 3 et/ou au moins un système de gestion de batterie selon la revendication 7.
